# EUROPEAN PATENT SPECIFICATION

(11) **EP 3 923 260 B1**
(45) Date of publication and mention of the grant of the patent: **18.02.2026**
(21) Application number: 21174858.7
(22) Date of filing: 19.05.2021
(51) Int. Cl.: G08G 5/21, G08G 5/26, G08G 5/34, G08G 5/55, B60L 53/66

(54) **SYSTEMS AND METHODS FOR DISPLAYING OFF-BOARD RECHARGE STATION INFORMATION FOR AN URBAN AIR MOBILITY (UAM) VEHICLE**
SYSTEME UND VERFAHREN ZUR ANZEIGE VON OFF-BOARD-LADESTATIONSINFORMATIONEN FÜR EIN FAHRZEUG DER URBANEN LUFTMOBILITÄT (UAM)
SYSTÈMES ET PROCÉDÉS D'AFFICHAGE D'INFORMATIONS SUR UNE STATION DE RECHARGE HORS BORD POUR UN VÉHICULE À MOBILITÉ AÉRIENNE EN MILIEU URBAIN (UAM)

(30) Priority: 09.06.2020 IN 202011024120; 28.07.2020 US 202016941246
(43) Date of publication of application: 15.12.2021
(73) Proprietor: Honeywell International Inc., Charlotte, NC 28202 (US)
(72) Inventor: B, Jayasenthilnathan, Charlotte, 28202 (US); GURUSAMY, Saravanakumar, Charlotte, 28202 (US); GADICHERLA, Madhava, Charlotte, 28202 (US)
(74) Representative: Ingrassia, Fisher & Lorenz UK Ltd.

(56) References cited:
- US-A1- 2016 363 456
- US-A1- 2017 217 319
- US-A1- 2019 265 057
- US-A1- 2020 105 149

## Description

### TECHNICAL FIELD

The following disclosure relates generally to urban air mobility (UAM) vehicles and, more particularly, to systems and methods for displaying off-board recharge station information for UAM vehicle.

### BACKGROUND

The emerging market of UAM (Urban Air Mobility) includes UAM vehicles such as e-VTOL (electric Vertical Take-off and Landing) vehicles. These vehicles each have their own battery capacity, range, and charging requirements.

UAM vehicle operations are different from traditional aircraft or helicopter operations in a variety of significant ways, impacting their recharge requirements. First, they may be traveling from point to point, with no guarantee that they can recharge at their origin and/or destination points. Next, as a function of a UAM vehicle-specific range, the UAM vehicle may have to deviate from its intended trip multiple times to recharge. Therefore, a technical problem is presented in locating potential recharge stations and determining which ones to utilize while achieving an overall goal of adhering as closely as possible to an intended path to minimize a time impact from the recharge deviations.

Accordingly, technologically improved systems and methods that provide off-board recharge station information for an urban air mobility (UAM) vehicle are desirable. Furthermore, other desirable features and characteristics of the present invention will be apparent from the subsequent detailed description and the appended claims, taken in conjunction with the accompanying drawings and the foregoing technical field and background. Relevant prior art is disclosed in US 2016/363456 A1 and US 2017/217319 A1.

### BRIEF SUMMARY

This summary is provided to describe select concepts in a simplified form that are further described in the Detailed Description. This summary is not intended to identify key or essential features of the claimed subject matter, nor is it intended to be used as an aid in determining the scope of the claimed subject matter.

Aspects and preferred embodiments of the invention are defined in the appended claims. Disclosed herein is a system for providing on a display device off-board recharge station information for an urban air mobility (UAM) vehicle according to claim 1.

Also disclosed herein is a method for providing on a display device off-board recharge station information for an urban air mobility (UAM) vehicle according to claim 11.

The dependent claims describe advantageous embodiments.

Furthermore, other desirable features and characteristics of the system and method will become apparent from the subsequent detailed description and the appended claims, taken in conjunction with the accompanying drawings and the preceding background.

### BRIEF DESCRIPTION OF THE DRAWINGS

At least one example of the present invention will hereinafter be described in conjunction with the following figures, wherein like numerals denote like elements, and:
FIG. 1 is a block diagram of a system for displaying off-board recharge station information for UAM vehicle, as illustrated in accordance with an exemplary embodiment of the present disclosure;
FIGS. 2-3 are map views (also referred to as a lateral or horizontal displays), as may be generated and displayed on the display device of a UAM vehicle, in accordance with an exemplary embodiment of the present disclosure;
FIGS. 4-5 are tabular views of recharge station information, as may be generated and displayed on the display device of a UAM vehicle, in accordance with an exemplary embodiment of the present disclosure;
FIG. 6 is a flow chart of a method for displaying off-board recharge station information for UAM vehicle, as may be implemented by the system of FIG. 1, in accordance with an exemplary embodiment of the present disclosure; and
FIG. 7 is an illustration of a primary flight display (PFD) with synthetic vision showing recharge station information, as may be generated and displayed on the display device of a UAM vehicle, in accordance with an exemplary embodiment of the present disclosure.

### DETAILED DESCRIPTION

The following Detailed Description is merely exemplary in nature and is not intended to limit the invention or the application and uses of the invention. The term "exemplary," as appearing throughout this document, is synonymous with the term "example" and is utilized repeatedly below to emphasize that the description appearing in the following section merely provides multiple non-limiting examples of the invention and should not be construed to restrict the scope of the invention, as set-out in the Claims, in any respect. As further appearing herein, the term "pilot" encompasses all users of the below-described aircraft system.

As mentioned, there are several technical problems unique to UAM vehicle operations as contrasted with traditional aircraft or helicopter operations. A focus herein is the UAM vehicle-specific recharge requirement. This technical problem encompasses recharge issues such as, by traveling from point to point (i.e., not from an airport to an airport), there is no guarantee that they can recharge at their origin and/or destination points. Additionally, as a function of a UAM vehicle-specific range, the UAM vehicle may have to deviate from its intended trip multiple times to recharge. Therefore, a multi-variable technical problem is presented in locating potential recharge stations and determining which ones to utilize while adhering as closely as possible to an intended path to minimize a time impact from the recharge deviations.

The present disclosure provides a solution to the above problems in the form of systems and methods for displaying off-board recharge station information for a UAM vehicle.

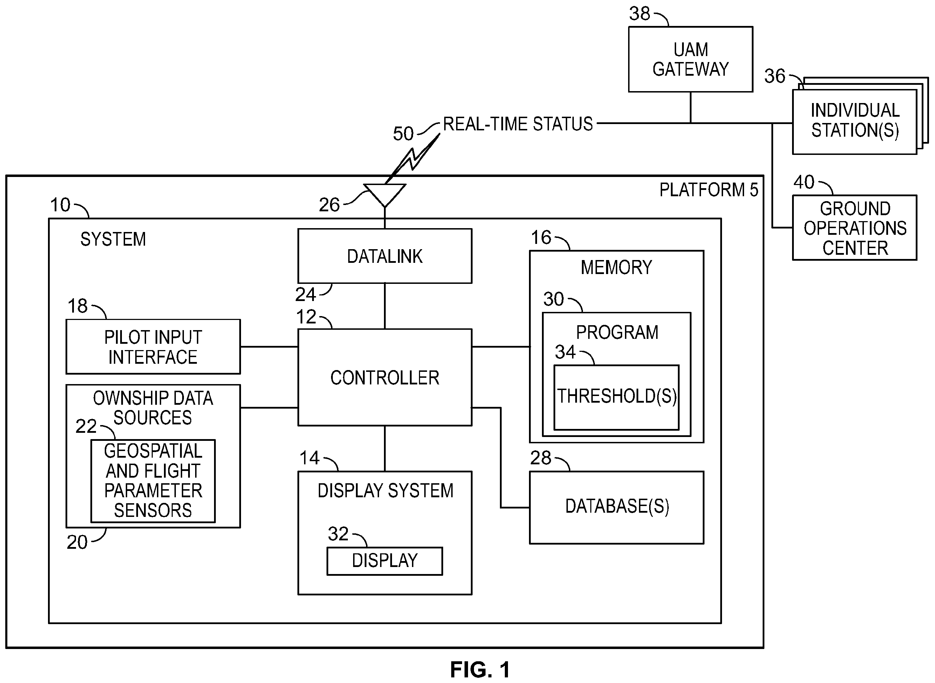

FIG. 1 is a block diagram of a system **10** for displaying off-board recharge station information for UAM vehicle, as illustrated in accordance with an exemplary and non-limiting embodiment of the present disclosure. The system **10** for displaying off-board recharge station information for UAM vehicle may be utilized onboard a mobile platform **5** to provide enhanced recharge station awareness, as described herein. In various embodiments, the mobile platform is urban air mobility (UAM) vehicle **5,** which carries or is equipped with the system **10** for displaying off-board recharge station information. As schematically depicted in FIG. 1, system **10** for displaying off-board recharge station information for a UAM vehicle (shortened herein to "system" **10**) includes the following components or subsystems, each of which may assume the form of a single device or multiple interconnected devices: a controller **12** operationally coupled to: at least one display device **14;** computer-readable storage media or memory **16;** an optional input interface **18,** and ownship data sources **20** including, for example, an array of flight system status and geospatial sensors **22.** The system **10** may be separate from or integrated within: a flight management system (FMS) and/or a flight control system (FCS). The system **10** also contains a datalink subsystem **24** including an antenna **26,** which may wirelessly transmit data to and receive real-time status data (**50**) from various sources external to system **10,** such as, each of: individual recharge stations **36,** a UAM gateway **38,** and/or a ground operations center **40.**

Although schematically illustrated in FIG. 1 as a single unit, the individual elements and components of the system **10** can be implemented in a distributed manner utilizing any practical number of physically distinct and operatively interconnected pieces of hardware or equipment. When the system **10** is utilized as described herein, the various components of the system **10** will typically all be located onboard the UAM vehicle **5.**

The term "controller," as appearing herein, broadly encompasses those components utilized to carry-out or otherwise support the processing functionalities of the system **10** for displaying off-board recharge station information for UAM vehicle. Accordingly, controller **12** can encompass or may be associated with a programmable logic array, application specific integrated circuit or other similar firmware, as well as any number of individual processors, flight control computers, navigational equipment pieces, computer-readable memories (including or in addition to memory **16**), power supplies, storage devices, interface cards, and other standardized components. In various embodiments, controller **12** embodies one or more processors operationally coupled to data storage having stored therein at least one firmware or software program (generally, computer-readable instructions that embody an algorithm) for carrying-out the various process tasks, calculations, and control/display functions described herein. During operation, the controller **12** may be programmed with and execute the at least one firmware or software program, for example, program **30**, that embodies an algorithm for receiving, processing, and displaying, off-board recharge station information for UAM vehicle **5,** to thereby perform the various process steps, tasks, calculations, and control/display functions described herein.

Controller **12** may exchange data, including receiving real-time status data **50**, with one or more external sources to support operation of the system **10** in embodiments. In this case, bidirectional wireless data exchange may occur over a communications network, such as a public or private network implemented in accordance with Transmission Control Protocol/Internet Protocol architectures or other conventional protocol standards. Encryption and mutual authentication techniques may be applied, as appropriate, to ensure data security.

Memory **16** can encompass any number and type of storage media suitable for storing computer-readable code or instructions, such as the aforementioned software program **30**, as well as other data generally supporting the operation of the system **10.** Memory **16** may also store one or more threshold **34** values, for use by an algorithm embodied in software program **30**.

The database(s) **28** are another form of storage media, which may be integrated into memory **16** or separate from it. Database(s) **28** may store recharge station information, such as, for each recharge station **36** of a plurality of recharge stations **36,** the respective station name **402,** a station location, a number (N) of recharge ports at the station, and a compatibility type for each of the N recharge ports. As used herein, the compatibility type of a recharge port includes the geometric size and shape of the port, the pinout/footprint, and any current/voltage/power specifications associated with the port. This recharge station information may be uploaded into the database **28** at an initialization step and then periodically updated, as directed by either a program **30** update or by an externally triggered update.

In various embodiments, UAM vehicle-specific parameters and information for UAM vehicle **5** may be stored in the memory **16** or in the one or more databases **28** and referenced by the program **30**. The UAM vehicle-specific information includes the specified type of recharge port needed by the UAM vehicle **5,** a maximum charge capacity, a UAM vehicle weight, average range, a maximum ground speed and a maximum vertical acceleration and deceleration.

In various embodiments, Database(s) **28** may also store two- or three-dimensional map data including geographical (terrain), buildings, bridges, and other structures, street maps, and navigational databases, which may be updated on a periodic or iterative basis to ensure data timeliness. This map data may be uploaded into the database **28** at an initialization step and then periodically updated, as directed by either a program **30** update or by an externally triggered update.

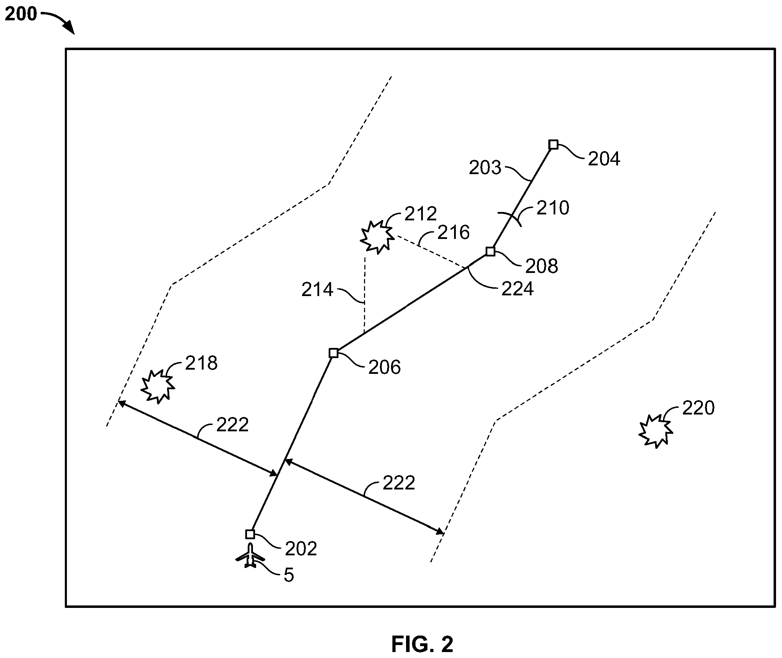

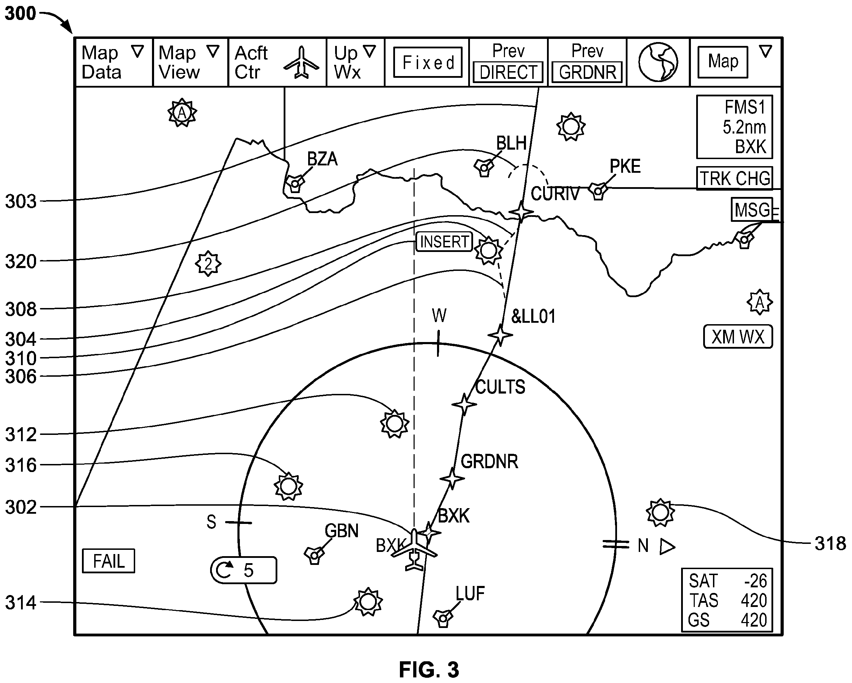

Flight parameter sensors and geospatial sensors **22** supply various types of data or measurements to controller **12** during UAM vehicle flight. In various embodiments, the geospatial sensors **22** supply, without limitation, one or more of: remaining battery charge, inertial reference system measurements providing a location (FIG. 2, **202**), Flight Path Angle (FPA) measurements, airspeed data, groundspeed data (including groundspeed direction), vertical speed data, vertical acceleration data, altitude data (FIG. 2, **202**), attitude data including pitch data and roll measurements, yaw data, heading (FIG. 3, **302**) information, sensed atmospheric conditions data (including wind speed and direction data), flight path data, flight track data, radar altitude data, and geometric altitude data.

In certain embodiments of system **10,** the controller **12** and the other components of the system **10** may be included within or cooperate with any number and type of systems commonly deployed onboard a UAM vehicle including, for example, an FMS, an Attitude Heading Reference System (AHRS), an Instrument Landing System (ILS), and/or an Inertial Reference System (IRS), to list but a few examples.

With continued reference to FIG. 1, display device **14** can include any number and type of image generating devices on which one or more avionic displays **32** may be produced. When the system **10** is utilized for a manned UAM vehicle, display device **14** may be affixed to the static structure of the UAM vehicle cockpit as, for example, a Head Down Display (HDD) or Head Up Display (HUD) unit. Alternatively, display device **14** may assume the form of a movable display device (e.g., a pilot-worn display device) or a portable display device, such as an Electronic Flight Bag (EFB), a laptop, or a tablet computer carried into the UAM vehicle cockpit by a pilot.

At least one avionic display **32** is generated on display device **14** during operation of the system **10;** the term "avionic display" defined as synonymous with the term "aircraft-related display" and "cockpit display" and encompasses displays generated in textual, graphical, cartographical, and other formats. The system **10** can generate various types of lateral and vertical avionic displays **32** on which map views and symbology, text annunciations, and other graphics pertaining to flight planning are presented for a pilot to view. The display device **14** is configured to continuously render at least a lateral display **32** showing the UAM vehicle **5** at its current location within the map data. The avionic display **32** generated and controlled by the system **10** can include graphical user interface (GUI) objects and alphanumerical input displays of the type commonly presented on the screens of MCDUs, as well as Control Display Units (CDUs) generally. Specifically, embodiments of avionic displays **32** include one or more two dimensional (2D) avionic displays, such as a horizontal (i.e., lateral) navigation display or vertical navigation display; and/or on one or more three dimensional (3D) avionic displays, such as a Primary Flight Display (PFD) or an exocentric 3D avionic display.

In various embodiments, a human-machine interface, such as the above described touch screen display, is implemented as an integration of the pilot input interface **18** and a display device **14.** Via various display and graphics systems processes, the controller **12** may command and control the touch screen display generating a variety of graphical user interface (GUI) objects or elements described herein, including, for example, buttons, sliders, and the like, which are used to prompt a user to interact with the human-machine interface to provide user input, and to activate respective functions and provide user feedback, responsive to received user input at the GUI element.

Turning now to FIGS. 2-3, and with continued reference to FIG. 1, the presentation of lateral images and interactive tabular views generated by system **10,** in accordance with various embodiments, is described in detail. The controller **12** may command the display device **14** to display a map showing the UAM vehicle at a current location, the intended trip, and an endurance line that represents an extent of the available UAM charge.

In FIG. 2, the UAM vehicle **5** is depicted on a map display **200** at current location **202**, on an intended trip **203**. The intended trip **203** passes through waypoint **206** and waypoint **208** en route to destination **204**. Recharge stations **212, 218** and **220** are indicated with a pre-selected symbol rendered at their respective locations. In an embodiment, the pre-selected symbol used for a recharge station is circular with a jagged edge on the external circumference, but other symbols may be employed in other embodiments.

The controller **12** processes various geospatial and flight parameter sensor **22** data with UAM vehicle-specific data and the intended trip **203** information to determine an available charge for the UAM vehicle **5,** and whether the UAM vehicle **5** can complete the intended trip **203** with the available UAM charge. When the controller **12** determines that the available UAM charge is not sufficient to complete the intended trip **203**, the controller **12** estimates a distance that could be traveled by the UAM vehicle **5** before the available charge expires, and renders an endurance line **210** intersecting the intended trip **203** at an estimated location on the intended trip **203** that the available charge is estimated to expire. The depicted endurance line **210** is slightly curved in FIG. 2 and FIG. 3, and may be rendered in a bright color, but in other embodiments, the endurance line **210** may be depicted differently.

The controller **12** receives real-time status data **50** from the nearby recharge stations **36.** Real-time status data **50** can reflect a status change at one or more of the nearby recharge stations **36.** Non-limiting examples of real-time status data include a port being closed for repair, an increase or decrease in queue, a change in average wait times, a change in a number of available ports, and the like. The received real-time status data **50** can be received directly from an individual recharge station **36,** or can be received from a UAM gateway **38,** or can be received from a ground operations center **40**. The controller **12** processes the received real-time status data **50** with retrieved recharge station information from database **28** to identify recharge stations **36** that are (i) compatible with the UAM vehicle **5,** and (ii) can be reached from the intended trip **203** with the UAM available charge. The controller **12** creates and stores an up-to-date list of the identified recharge stations **36** and updates this list responsive to received real-time status data **50**.

Additionally, in various embodiments, a predefined distance **222** may be utilized by the controller **12** to further filter the identified recharge stations that could be used by the UAM vehicle **5.** The predefined distance **222** extends at least laterally on each side of the intended trip **203** and may be employed to limit how far off the intended trip **203** the pilot may be willing to (or permitted to) travel to recharge; therefore, this is different than the estimated distance that could be achieved before the available charge expires. In various embodiments, the predefined distance **222** is pre-programmed and stored as a threshold **34** in memory **16.** In other embodiments, the predefined distance **222** is entered in the course of UAM operation by a user via the pilot input interface **18,** or by an air traffic control authority. On FIG. 2, the predefined distance **222** is depicted on the map display **200** to assist with visualizing the concept; however, in some embodiments (such as is depicted in FIG. 3), the predefined distance **222** is not depicted.

The controller **12** uses the above determinations to identify a recharge station **212** having a shortest path deviation (**214** and **216**) distance from the intended trip **203**, and commands the display device **14** to visually depict on the map the filtered identified recharge stations, and to visually distinguish the identified recharge station **212** having the shortest path deviation from the intended trip **203**, as determined based on the updated identified recharge stations. In various embodiments, the controller **12** further visually depicts the shortest path itself, as outbound path **214** and return path **216.** Note that the shortest path deviation distance is determined by the controller **12** to be a summation of an outbound path **214** and a return path **216**, which may not have the same length, the shortest path deviation is not simply an out-an-back route, and that the return path **216** places the UAM vehicle **5** back on the intended trip at a recapture point **224** that is closer to a trip destination and different from a departure point from which the outbound path **214** is started. In this manner, (not just showing an out-and-back distance to the recharge station **212** from the intended trip **203**) the controller **12** is providing an enhanced human-machine interface by calculating and displaying a shortest path that is compatible with the direction of the intended trip **203**, and therefore likely to have the most minimal time impact on the intended trip **203.**

FIG. 3 shows many of the same concepts described in connection with FIG. 2, but in FIG. 3, the intended trip is a flight plan **303**. The UAM vehicle **302** is shown on the flight plan **303**. A recharge station **304** has been determined to have the shortest path and is visually distinguished with outbound path **306** and return path **308.** Endurance line **320** is depicted on the flight plan **303.** Recharge stations **312**, **314**, **316**, and **318** are rendered. As described above, in various embodiments, the controller **12** may indicate the position of the rendered recharge stations with respect to the predefined distance. In various examples, the controller **12** uses a visualization technique, such as color coding, highlighting, or darkening a border, on the symbols used for recharge stations to depict their position with respect to the predefined distance. For example, as shown in FIG. 3, the controller **12** may command the display device **14** to present identified recharge stations on the map display **300** and, as a result of filtering with the predefined distance, color code recharge stations (**304**, **312**, and **314**) within the predefined distance from the intended trip a first color, such as green; and, color code recharge stations (**316** and **318**) beyond the predefined distance from the intended trip a second color that is distinguishable from the first color, such as red.

Various embodiments additionally distinguish the shortest path recharge station by rendering a text box **310** alongside the shortest path recharge station **304.** The text box **310** may recite a user-selectable prompt, such as "insert," or "add to flight plan." When the user selects the insert or add to flight plan, the controller **12** may automatically adjust the flight plan to reflect the deviation to the charging station.

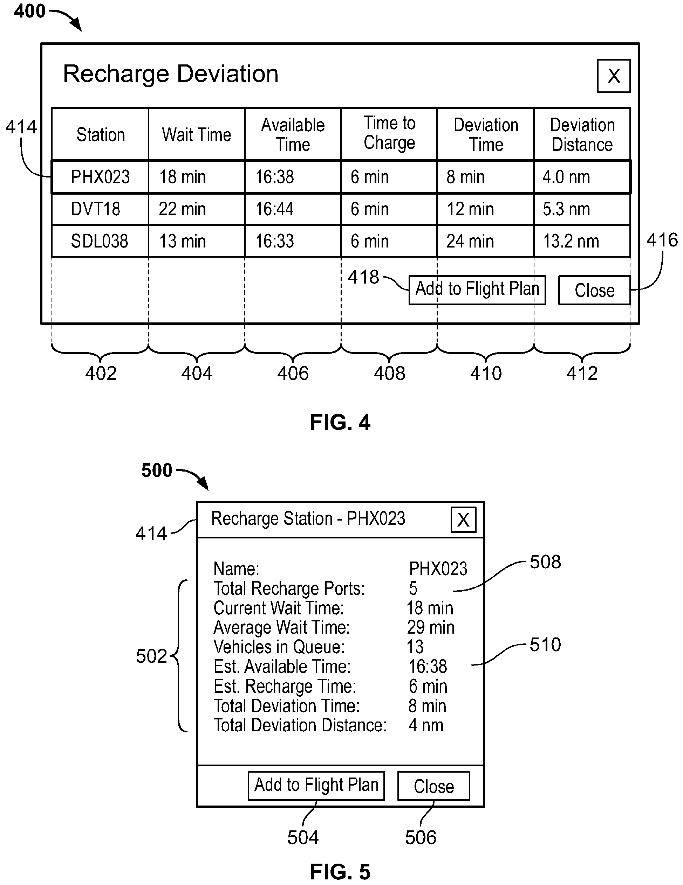

Turning now to FIGS. 4-5, in various embodiments, the controller **12** may prompt the user and respond to various user selections to generate and display various tabular views that assist a user in understanding recharge station options. The controller **12** may reference stored recharge station information and received real-time status updates to generate and display a first tabular view **400**, including, for each of the identified recharge stations, information such as, a station name **402**, a current wait time **404**, a time available 406, an UAM-specific time to charge **408**, a path deviation time **410**, and a path deviation distance **412.** The first tabular view **400** may include a user selectable option to close **416** the tabular view. The controller **12** places the recharge station having the shortest path deviation distance at the top of the table and highlights it PHX023 (**414**) (shown highlighted with a boundary around the table entry, but other visualization techniques may be employed). The user may add the highlighted recharge station to the flight plan, for example, by selecting a prompt such as GUI button **418.**

The user may also open additional tabular information about a selected recharge station. For example, the user could select station PHX023 (**414**), responsive to which the controller **12** may open a second tabular view **500** showing, only for the selected recharge station **414**, recharge station status and information **502.** The recharge station status and information **502** may include a total number of recharge ports **508**, an average wait time **510**, a current wait time, a number of vehicles in queue, the estimated available time, an estimated recharge time, the total deviation time and the total deviation distance. The tabular view second may include a user selectable option to close **506** the second tabular view **500.** The second tabular view **500** may also include a user selectable option **504** to add the selected station to the flight plan.

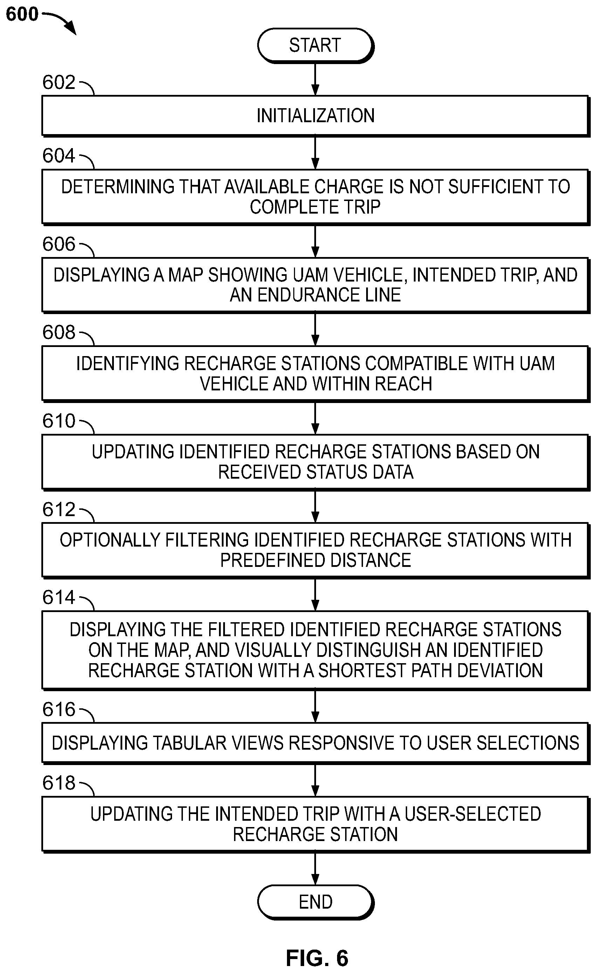

Turning now to FIG. 6, the system **10** described above may be implemented by a processor-executable method **600** providing off-board recharge station **36** information for an urban air mobility (UAM) vehicle **5.** For illustrative purposes, the following description of method **600** may refer to elements mentioned above in connection with FIG. 1. In practice, portions of method **600** may be performed by different components of the described system. It should be appreciated that method **600** may include any number of additional or alternative tasks, the tasks shown in FIG. 6 need not be performed in the illustrated order, and method **600** may be incorporated into a more comprehensive procedure or method having additional functionality not described in detail herein. Moreover, one or more of the tasks shown in FIG. 6 could be omitted from an embodiment of the method **600** as long as the intended overall functionality remains intact.

**At 602,** the system **10** is initialized. Initialization may include loading instructions and program **30** into a processor within the controller **12**, as well as loading initial recharge station information, map data, and UAM vehicle-specific features into one or more database(s) **28.**

**At 604,** the controller **12** processes data from available ownship data sources **20**, the intended trip or flight plan, and determines how far the UAM vehicle can travel on the available charge, and relatedly, whether there is sufficient available charge to complete the intended trip. When there is insufficient available charge to complete the intended trip, the controller displays a map showing the UAM vehicle **5** at its current location, the intended trip, and renders an endurance line on the intended trip to show an estimated distance the UAM vehicle **5** can travel on the available charge (at **606**).

**At 608,** the controller **12** references available recharge station **36** information and identifies recharge stations that are compatible with the UAM vehicle **5** and within reach of the available charge. At **610**, responsive to any received real-time status updates on the identified recharge stations, the controller updates its list of identified recharge stations. At **612**, the identified recharge stations may be optionally filtered by a predefined distance to enhance the human machine interface by supporting color coding or other intuitive visualization methods to quickly visually convey proximity of recharge stations.

At **614**, the identified recharge stations are displayed on the map, and an identified recharge station having a shortest deviation distance is visually distinguished. In embodiments using the predefined distance at **612**, a color coding scheme may be used to visually convey which identified recharge stations are within the predefined distance (for example, by rendering their symbols in green) and which identified recharge stations are outside of the predefined distance (for example, by rendering their symbols in red).

At **616**, a first tabular view (shown in FIG. 4) and a second tabular view (shown in FIG. 5) may be created and displayed by the controller **12**, responsive to user input selections. In some embodiments, the tabular views may be rendered as an overlay on the map, in an area that does not obscure the intended trip or flight plan. In other embodiments, the tabular views may be rendered in a dedicated area on a multi-function display that is different from the map view. At **618**, responsive to a user selection, the controller **12** may update the intended trip to include a deviation to a recharge station. After **618**, the method **600** may end or return to **604.**

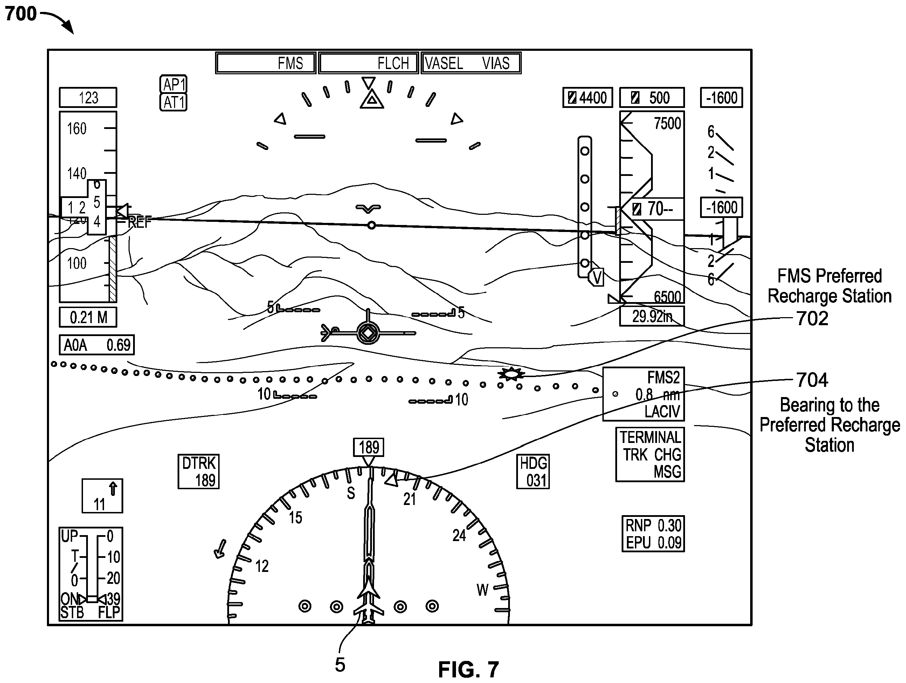

Turning now to FIG. 7, in various embodiments, the controller **12** may generate and display recharge information for a primary flight display (PFD) **700**; in particular, an indicator **702** may be rendered at a location of the recommended recharge station. Additionally, the controller **12** may render a bearing indicator **704**, such as a carrot or triangle, on the compass of the PFD **700.**

Thus, enhanced systems and methods for providing off-board recharge station information for an urban air mobility (UAM) vehicle are provided. The provided methods and systems provide an objectively improved human-machine interface with map views and interactive tabular views that provide relevant recharge station information. The provided enhanced features allow for a user to plan recharge deviations with confidence that the intended trip is being adhered to as closely as possible.

Although an exemplary embodiment of the present disclosure has been described above in the context of a fully-functioning computer system (e.g., system **10** described above in conjunction with FIG. 1), those skilled in the art will recognize that the mechanisms of the present disclosure are capable of being distributed as a program product (e.g., an Internet-disseminated program or software application) and, further, that the present teachings apply to the program product regardless of the particular type of computer-readable media (e.g., hard drive, memory card, optical disc, etc.) employed to carry-out its distribution.

Terms such as "comprise," "include," "have," and variations thereof are utilized herein to denote non-exclusive inclusions. Such terms may thus be utilized in describing processes, articles, apparatuses, and the like that include one or more named steps or elements but may further include additional unnamed steps or elements. While at least one exemplary embodiment has been presented in the foregoing Detailed Description, it should be appreciated that a vast number of variations exist. It should also be appreciated that the exemplary embodiment or exemplary embodiments are only examples, and are not intended to limit the scope, applicability, or configuration of the invention in any way. Rather, the foregoing Detailed Description will provide those skilled in the art with a convenient road map for implementing an exemplary embodiment of the invention. Various changes may be made in the function and arrangement of elements described in an exemplary embodiment without departing from the scope of the invention as set-forth in the appended Claims.

## Claims

1. A system for providing on a display device off-board recharge station information for an urban air mobility, UAM, vehicle, the UAM vehicle comprising an electric Vertical Take-off and Landing, e-VTOL, vehicle, the system comprising:
a datalink subsystem (24);
a data storage (28) storing recharge station information;
a controller (12) having an on-board processor operationally coupled to the datalink subsystem (24) and the data storage (28) and configured by programming instructions on non-transient computer readable media to:
determine (604) that an available UAM charge is not sufficient to complete an intended trip, the intended trip comprising a flight plan;
command (606) the display device to display a map showing the UAM at a current location, the intended trip, and an endurance line that represents an extent of the available UAM charge;
by referencing the recharge station information, identify (608) recharge stations that are compatible with the UAM, and can be reached from the intended trip with the UAM available charge;
create and store an up-to-date list of the identified recharge stations;
update (610)
the list of identified recharge stations responsive to any real-time status updates on the identified recharge stations received using the datalink subsystem (24); and
command (614) the display device to display the identified recharge stations and to visually depict an identified recharge station having a shortest path deviation from the intended trip, as determined based on the updated identified recharge stations, the shortest path deviation including an outbound path from the intended trip to the identified recharge station and a return path from the identified recharge station to a recapture point on the intended trip.

2. The system of claim 1, wherein the controller is integrated with a flight management system, FMS, of the UAM.

3. The system of claim 1, wherein the controller (12) is further configured to:
generate and display a first tabular view of the identified recharge stations, the tabular view including a station name, a current wait time, an UAM-specific time to charge, a path deviation time, and a path deviation distance; and
open a second tabular view showing, for a selected recharge station, recharge station information and recharge station status responsive to receiving a user input selecting the recharge station.

4. The system of claim 3, wherein the data storage storing recharge station information includes the station name, a station location, a number of recharge ports at the station, and a compatibility type for each recharge port.

5. The system of claim 4, wherein a real-time status update includes a current wait time, and an average wait time.

6. The system of claim 3, wherein the controller (12) is further configured to calculate an estimated available time and display the calculated available time in the first tabular view.

7. The system of claim 3, wherein the controller (12) is further configured to display, in the first tabular view, a prompt for a user to add a recharge station to the flight plan.

8. The system of claim 5, wherein the real-time status update from the at least one of the identified recharge stations is wirelessly received via a UAM gateway.

9. The system of claim 1, wherein the controller (12) is further configured to:
color code recharge stations within a predefined distance from the intended trip a first color; and
color code recharge stations beyond the predefined distance from the intended trip a second color that is distinguishable from the first color.

10. The system of claim 9, wherein the controller (12) is further configured to render a user-selectable close button on the first tabular view and on the second tabular view.

11. A method for providing on a display device off-board recharge station information for an urban air mobility, UAM, vehicle, the UAM vehicle comprising an electric Vertical Take-off and Landing e-VTOL, vehicle, the method comprising:
determining (604), by a controller on-board the UAM vehicle, that an available UAM charge is not sufficient to complete an intended trip, the intended trip comprising a flight plan;
displaying (606) a map showing the UAM vehicle at a current location, the intended trip, and an endurance line that represents an extent of the available UAM charge;
retrieving, by the controller, recharge station information including the station name, a station location, a number of recharge ports at the station, and a compatibility type for each recharge port;
identifying (608), by the controller and by referencing the retrieved recharge station information, recharge stations that are compatible with the UAM vehicle, and can be reached from the intended trip with the UAM available charge;
creating and storing and up-to-date list of the identified recharge stations;
updating (610), by the controller, the list of identified recharge stations responsive to any real-time status updates on the identified recharge stations received via a datalink subsystem; and
commanding (614) the display device to visually depict on the map the identified recharge stations, and visually distinguish an identified recharge station having a shortest path deviation from the intended trip, as determined based on the updated identified recharge stations, the shortest path deviation including an outbound path from the intended trip to the identified recharge station and a return path from the identified recharge station to a recapture point on the intended trip.

12. The method of claim 11, further comprising:
generating and displaying a first tabular view of the identified recharge stations, the tabular view including a station name, a current wait time, an UAM vehicle-specific time to charge, a path deviation time, and a path deviation distance; and
displaying a prompt for a user to add a selected recharge station to the intended trip.

13. The method of claim 12, further comprising:
calculating, by the controller, an estimated available time; and
displaying the estimated available time in the first tabular view.

14. The method of claim 12, further comprising:
receiving a user input selecting an identified recharge station; and
opening a second tabular view showing, for only the selected recharge station, recharge station information and recharge station status responsive to the user input.

## Patentansprüche

1. System zum Bereitstellen von Off-Board-Aufladestationsinformationen auf einer Anzeigevorrichtung für ein Fahrzeug der urbanen Luftmobilität, UAM, wobei das UAM-Fahrzeug ein elektrisches senkrecht startendes und landendes, e-VTOL, Fahrzeug umfasst, das System umfassend:
ein Datenverbindungsuntersystem (24);
einen Datenspeicher (28), der Aufladestationsinformationen speichert;
eine Steuerung (12), die einen On-Board-Prozessor aufweist, der betriebsmäßig mit dem Datenverbindungsuntersystem (24) und dem Datenspeicher (28) gekoppelt ist, und durch Programmieranweisungen auf dauerhaften computerlesbaren Medien dazu konfiguriert ist:
zu bestimmen (604), dass eine verfügbare UAM-Ladung nicht ausreichend ist, um eine beabsichtigte Strecke zu absolvieren, wobei die beabsichtigte Strecke einen Flugplan umfasst;
der Anzeigevorrichtung zu befehlen (606), eine Karte anzuzeigen, die das UAM an einem aktuellen Standort, die beabsichtigte Strecke und eine Höchstflugdauerlinie zeigt, die eine Weite der verfügbaren UAM-Ladung darstellt;
durch Referenzieren der Aufladestationsinformationen, Aufladestationen zu identifizieren (608), die mit dem UAM kompatibel sind und von der beabsichtigten Strecke aus mit der verfügbaren UAM-Ladung erreicht werden können;
eine aktualisierte Liste der identifizierten Aufladestationen zu erstellen und zu speichern;
die Liste von identifizierten Aufladestationen als Antwort auf alle Echtzeitstatusaktualisierungen an den identifizierten Aufladestationen unter Verwendung des Datenverbindungsuntersystems (24) zu aktualisieren (610); und
der Anzeigevorrichtung zu befehlen (614), die identifizierten Aufladestationen anzuzeigen und eine identifizierte Aufladestation, die eine kürzeste Wegabweichung von der beabsichtigten Strecke aufweist, bestimmt auf Basis der aktualisierten identifizierten Aufladestationen, optisch abzubilden, wobei die kürzeste Wegabweichung einen ausgehenden Weg von der beabsichtigten Strecke zu der identifizierten Aufladestation und einen Rückweg von der identifizierten Aufladestation zu einem Wiederaufnahmepunkt auf der beabsichtigten Strecke beinhaltet.

2. System nach Anspruch 1, wobei die Steuerung in ein Flugmanagementsystem, FMS, des UAM integriert ist.

3. System nach Anspruch 1, wobei die Steuerung (12) ferner dazu konfiguriert ist:
eine erste tabellarische Ansicht der identifizierten Aufladestationen zu erzeugen und anzuzeigen, wobei die tabellarische Ansicht einen Stationsnamen, eine aktuelle Wartezeit, eine UAM-spezifische Ladezeit, eine Wegabweichungszeit und eine Wegabweichungsdistanz beinhaltet; und
eine zweite tabellarische Ansicht zu öffnen, die für eine ausgewählte Aufladestation Aufladestationsinformationen und einen Aufladestationsstatus zeigt, als Antwort auf das Empfangen einer die Aufladestation auswählenden Benutzereingabe.

4. System nach Anspruch 3, wobei der Datenspeicher, der Aufladestationsinformationen speichert, den Stationsnamen, einen Stationsstandort, eine Anzahl von Aufladeanschlüssen an der Station und einen Kompatibilitätstyp für jeden Aufladeanschluss beinhaltet.

5. System nach Anspruch 4, wobei eine Echtzeitstatusaktualisierung eine aktuelle Wartezeit und eine durchschnittliche Wartezeit beinhaltet.

6. System nach Anspruch 3, wobei die Steuerung (12) ferner dazu konfiguriert ist, eine geschätzte verfügbare Zeit zu berechnen und die berechnete verfügbare Zeit in der ersten tabellarischen Ansicht anzuzeigen.

7. System nach Anspruch 3, wobei die Steuerung (12) ferner dazu konfiguriert ist, in der ersten tabellarischen Ansicht eine Eingabeaufforderung für einen Benutzer anzuzeigen, eine Aufladestation zu dem Flugplan hinzuzufügen.

8. System nach Anspruch 5, wobei die Echtzeitstatusaktualisierung von der mindestens einen der identifizierten Aufladestationen drahtlos über ein UAM-Gateway empfangen wird.

9. System nach Anspruch 1, wobei die Steuerung (12) ferner dazu konfiguriert ist:
Aufladestationen innerhalb einer vordefinierten Distanz von der beabsichtigten Strecke in einer ersten Farbe farblich zu kodieren; und
Aufladestationen jenseits der vordefinierten Distanz von der beabsichtigten Strecke in einer zweiten Farbe farblich zu kodieren, die sich von der ersten Farbe hervorhebt.

10. System nach Anspruch 9, wobei die Steuerung (12) ferner dazu konfiguriert ist, einen vom Benutzer auswählbaren Schließen-Taster auf der ersten tabellarischen Ansicht und auf der zweiten tabellarischen Ansicht wiederzugeben.

11. Verfahren zum Bereitstellen von Off-Board-Aufladestationsinformationen auf einer Anzeigevorrichtung für ein Fahrzeug der urbanen Luftmobilität, UAM, wobei das UAM-Fahrzeug ein elektrisches senkrecht startendes und landendes, e-VTOL, Fahrzeug umfasst, das Verfahren umfassend:
Bestimmen (604), durch eine On-Board-Steuerung des UAM-Fahrzeugs, dass eine verfügbare UAM-Ladung nicht ausreichend ist, um eine beabsichtigte Strecke zu absolvieren, wobei die beabsichtigte Strecke einen Flugplan umfasst;
Anzeigen (606) einer Karte, die das UAM-Fahrzeug an einem aktuellen Standort, die beabsichtigte Strecke und eine Höchstflugdauerlinie zeigt, die eine Weite der verfügbaren UAM-Ladung darstellt;
Abrufen, durch die Steuerung, von Aufladestationsinformationen, die den Stationsnamen, einen Stationsstandort, eine Anzahl von Aufladeanschlüssen an der Station und einen Kompatibilitätstyp für jeden Aufladeanschluss beinhalten;
Identifizieren (608), durch die Steuerung und durch Referenzieren der abgerufenen Aufladestationsinformationen, von Aufladestationen, die mit dem UAM-Fahrzeug kompatibel sind und von der beabsichtigten Strecke aus mit der verfügbaren UAM-Ladung erreicht werden können;
Erstellen und Speichern einer aktualisierten Liste der identifizierten Aufladestationen;
Aktualisieren (610), durch die Steuerung, der Liste von identifizierten Aufladestationen als Antwort auf alle über ein Datenverbindungsuntersystem empfangenen Echtzeitstatusaktualisierungen an den identifizierten Aufladestationen;
und Befehlen (614) der Anzeigevorrichtung, die identifizierten Aufladestationen auf der Karte optisch abzubilden und eine identifizierte Aufladestation, die eine kürzeste Wegabweichung von der beabsichtigten Strecke aufweist, bestimmt auf Basis der aktualisierten identifizierten Aufladestationen, optisch hervorzuheben, wobei die kürzeste Wegabweichung einen ausgehenden Weg von der beabsichtigten Strecke zu der identifizierten Aufladestation und einen Rückweg von der identifizierten Aufladestation zu einem Wiederaufnahmepunkt auf der beabsichtigten Strecke beinhaltet.

12. Verfahren nach Anspruch 11, ferner umfassend:
Erzeugen und Anzeigen einer ersten tabellarischen Ansicht der identifizierten Aufladestationen zu erzeugen und anzuzeigen, wobei die tabellarische Ansicht einen Stationsnamen, eine aktuelle Wartezeit, eine UAM-Fahrzeug-spezifische Ladezeit, eine Wegabweichungszeit und eine Wegabweichungsdistanz beinhaltet; und
Anzeigen einer Eingabeaufforderung für einen Benutzer, eine ausgewählte Aufladestation zu der beabsichtigten Strecke hinzuzufügen.

13. Verfahren nach Anspruch 12, ferner umfassend:
Berechnen, durch die Steuerung, einer geschätzten verfügbaren Zeit; und
Anzeigen der geschätzten verfügbaren Zeit in der ersten tabellarischen Ansicht.

14. Verfahren nach Anspruch 12, ferner umfassend:
Empfangen einer Benutzereingabe, die eine identifizierte Aufladestation auswählt; und
Öffnen einer zweiten tabellarischen Ansicht, die nur für die ausgewählte Aufladestation Aufladestationinformationen und einen Aufladestationsstatus als Antwort auf die Benutzereingabe anzeigt.

## Revendications

1. Système pour fournir sur un dispositif d'affichage des informations de station de recharge hors bord pour un véhicule à mobilité aérienne en milieu urbain, UAM, le véhicule UAM comprenant un véhicule à décollage et atterrissage verticaux électrique, e-VTOL, le système comprenant :
un sous-système de liaison de données (24) ;
un stockage de données (28) stockant des informations de station de recharge ;
un contrôleur (12) ayant un processeur embarqué couplé de manière opérationnelle au sous-système de liaison de données (24) et au stockage de données (28) et configuré par des instructions de programmation sur des supports non transitoires lisibles par ordinateur pour :
déterminer (604) qu'une charge UAM disponible n'est pas suffisante pour effectuer un déplacement prévu, le déplacement prévu comprenant un plan de vol ;
commander (606) au dispositif d'affichage d'afficher une carte montrant l'UAM à un emplacement actuel, le déplacement prévu et une ligne d'endurance qui représente une étendue de la charge UAM disponible ;
en se référant aux informations de station de recharge, identifier (608) des stations de recharge qui sont compatibles avec l'UAM et peuvent être atteintes à partir du déplacement prévu avec la charge UAM disponible ;
créer et stocker une liste mise à jour des stations de recharge identifiées ;
mettre à jour (610) la liste de stations de recharge identifiées en réponse à toutes les mises à jour d'état en temps réel sur les stations de recharge identifiées reçues en utilisant le sous-système de liaison de données (24) ; et
commander (614) au dispositif d'affichage d'afficher les stations de recharge identifiées et de représenter visuellement une station de recharge identifiée présentant une déviation de trajectoire la plus courte à partir du déplacement prévu, comme déterminé sur la base des stations de recharge identifiées mises à jour, la déviation de la trajectoire la plus courte incluant une trajectoire aller du déplacement prévu vers la station de recharge identifiée et une trajectoire retour de la station de recharge identifiée vers un point de reprise sur le déplacement prévu.

2. Système selon la revendication 1, dans lequel le contrôleur est intégré à un système de gestion de vol, FMS, de l'UAM.

3. Système selon la revendication 1, dans lequel le contrôleur (12) est en outre configuré pour :
générer et afficher une première vue tabulaire des stations de recharge identifiées, la vue tabulaire incluant un nom de station, un temps d'attente actuel, un temps de charge spécifique à l'UAM, un temps de déviation de trajectoire et une distance de déviation de trajectoire ; et
ouvrir une deuxième vue tabulaire montrant, pour une station de recharge sélectionnée, des informations de station de recharge et un état de station de recharge en réponse à la réception d'une entrée d'utilisateur sélectionnant la station de recharge.

4. Système selon la revendication 3, dans lequel le stockage de données stockant des informations de station de recharge inclut le nom de la station, l'emplacement de la station, un nombre de ports de recharge à la station et un type de compatibilité pour chaque port de recharge.

5. Système selon la revendication 4, dans lequel une mise à jour d'état en temps réel inclut un temps d'attente actuel et un temps d'attente moyen.

6. Système selon la revendication 3, dans lequel le contrôleur (12) est en outre configuré pour calculer un temps disponible estimé et afficher le temps disponible calculé sur la première vue tabulaire.

7. Système selon la revendication 3, dans lequel le contrôleur (12) est en outre configuré pour afficher, sur la première vue tabulaire, une invite pour qu'un utilisateur ajoute une station de recharge au plan de vol.

8. Système selon la revendication 5, dans lequel la mise à jour d'état en temps réel à partir de l'au moins une des stations de recharge identifiées est reçue sans fil via une passerelle d'UAM.

9. Système selon la revendication 1, dans lequel le contrôleur (12) est en outre configuré pour :
attribuer un code couleur d'une première couleur à des stations de recharge à une distance prédéfinie du déplacement prévu ; et
attribuer un code couleur d'une deuxième couleur qui est différenciable de la première couleur à des stations de recharge au-delà de la distance prédéfinie du déplacement prévu.

10. Système selon la revendication 9, dans lequel le contrôleur (12) est en outre configuré pour faire apparaître un bouton de fermeture sélectionnable par l'utilisateur sur la première vue tabulaire et sur la deuxième vue tabulaire.

11. Procédé pour fournir sur un dispositif d'affichage des informations de station de recharge hors bord pour un véhicule à mobilité aérienne en milieu urbain, UAM, le véhicule UAM comprenant un véhicule à décollage et atterrissage verticaux électrique, e-VTOL, le procédé comprenant :
la détermination (604), par un contrôleur embarqué du véhicule UAM, qu'une charge UAM disponible n'est pas suffisante pour effectuer un déplacement prévu, le déplacement prévu comprenant un plan de vol ;
l'affichage (606) d'une carte montrant le véhicule UAM à un emplacement actuel, le déplacement prévu et une ligne d'endurance qui représente une étendue de la charge UAM disponible ;
la récupération, par le contrôleur, d'informations de station de recharge incluant le nom de la station, l'emplacement de la station, un nombre de ports de recharge à la station et un type de compatibilité pour chaque port de recharge ;
l'identification (608), par le contrôleur et en se référant aux informations de stations de recharge récupérées, de stations de recharge qui sont compatibles avec le véhicule UAM, et peuvent être atteintes à partir du déplacement prévu avec la charge UAM disponible ;
la création et le stockage d'une liste mise à jour des stations de recharge identifiées ;
la mise à jour (610), par le contrôleur, de la liste de stations de recharge identifiées en réponse à toutes les mises à jour d'état en temps réel sur les stations de recharge identifiées reçues via un sous-système de liaison de données ;
et le fait de commander (614) au dispositif d'affichage de représenter visuellement sur la carte les stations de recharge identifiées, et de différencier visuellement une station de recharge identifiée présentant une déviation de trajectoire la plus courte à partir du déplacement prévu, comme déterminé sur la base des stations de recharge identifiées mises à jour, la déviation de trajectoire la plus courte incluant une trajectoire aller du déplacement prévu vers la station de recharge identifiée et une trajectoire retour de la station de recharge identifiée vers un point de reprise sur le déplacement prévu.

12. Procédé de la revendication 11, comprenant en outre :
la génération et l'affichage d'une première vue tabulaire des stations de recharge identifiées, la vue tabulaire incluant un nom de station, un temps d'attente actuel, un temps de charge spécifique au véhicule UAM, un temps de déviation de trajectoire et une distance de déviation de trajectoire ; et
l'affichage d'une invite pour qu'un utilisateur ajoute une station de recharge sélectionnée au déplacement prévu.

13. Procédé selon la revendication 12, comprenant en outre :
le calcul, par le contrôleur, d'un temps disponible estimé ; et
l'affichage du temps disponible estimé sur la première vue tabulaire.

14. Procédé de la revendication 12, comprenant en outre :
la réception d'une entrée utilisateur sélectionnant une station de recharge identifiée ; et
l'ouverture d'une deuxième vue tabulaire montrant, pour la station de recharge sélectionnée uniquement, des informations de station de recharge et l'état de station de recharge en réponse à l'entrée utilisateur.
